# EUROPÄISCHE PATENTANMELDUNG

(11) **EP 4 570 543 A1**
(43) Veröffentlichungstag der Anmeldung: **18.06.2025**
(21) Anmeldenummer: 23217174.4
(22) Anmeldetag: 15.12.2023
(51) Int. Cl.: B60J 5/14

(54) **NUTZFAHRZEUGAUFBAU MIT ROLLTOR SOWIE NUTZFAHRZEUG**

(71) Anmelder: Schmitz Cargobull AG, 48341 Altenberge (DE)
(72) Erfinder: OVERBECK, Nicolas, 46399 Bocholt (DE)
(74) Vertreter: Cohausz & Florack

(57) **Zusammenfassung**

Ein Nutzfahrzeugaufbau (2) für ein Nutzfahrzeug mit einem Rolltor (8), umfassend ein von einer geschlossenen Stellung in eine geöffnete Stellung und zurück verstellbaren Wandelement (9) und ein Schienensystem (10) zum Führen des Wandelements (9) während des Verstellens des Wandelements (9), wobei das Wandelement (9) eine Reihe von Paneelen (16,17) aufweist, wobei jedes Paneel (16,17) am oberen Rand ein oberes Verbindungsprofil (18) aufweist und am gegenüberliegenden unteren Rand ein unteres Verbindungsprofil (19) aufweist und wobei jeweils zwei aneinander angrenzende Paneele (16,17) über ein unteres Verbindungsprofil (19) und ein oberes Verbindungsprofil (18) formschlüssig miteinander verbunden sind. Damit der Nutzfahrzeugaufbau einfacher und kostengünstiger gefertigt werden kann, ist vorgesehen, dass die oberen Verbindungsprofile (18) und die unteren Verbindungsprofile (19) jeweils derart korrespondierend zueinander und untereinander jeweils derart gleichartig ausgebildet sind, so dass jedes untere Verbindungsprofil (19) mit jedem oberen Verbindungsprofil (18) formschlüssig verbindbar ist.

## Beschreibung

Die Erfindung betrifft einen Nutzfahrzeugaufbau für ein Nutzfahrzeug, insbesondere Lastkraftwagen, Anhänger oder Sattelauflieger, mit einem Rolltor, umfassend ein von einer den Nutzfahrzeugaufbau verschließenden geschlossenen Stellung in eine den Nutzfahrzeugaufbau zum Be- und/oder Entladen freigebende geöffnete Stellung und zurück verstellbaren Wandelement und ein Schienensystem zum Führen des Wandelements während des Verstellens des Wandelements von der geschlossenen Stellung in die geöffnete Stellung und zurück, wobei das Wandelement eine Reihe von Paneelen aufweist, wobei jedes Paneel am oberen Rand ein oberes Verbindungsprofil aufweist und am gegenüberliegenden unteren Rand ein unteres Verbindungsprofil aufweist und wobei jeweils zwei aneinander angrenzende Paneele über ein unteres Verbindungsprofil und ein oberes Verbindungsprofil formschlüssig miteinander verbunden sind. Ferner betrifft die Erfindung ein Nutzfahrzeug in Form eines Lastkraftwagens, Anhängers oder Sattelaufliegers mit einem solchen Nutzfahrzeugaufbau.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurück blasen.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise dieser Nutzfahrzeugaufbauten werden diese für den sogenannten Trockentransport aber nur in Ausnahmefällen für den Kühltransport eingesetzt. Nutzfahrzeuge mit entsprechenden Kofferaufbauten, werden auch als Trockenfrachter bezeichnet.

Nutzfahrzeugaufbauten, insbesondere Kofferaufbauten, deren Rückwand keine Flügeltüren aufweisen, sind typischerweise mit einem Rolltor zum Verschließen der Rückwand ausgestattet. Die Rolltore weisen ein Wandelement auf, das aus einer Reihe von Paneelen zusammengesetzt ist und entlang eines Schienensystems von einer unteren, die Rückwand verschließenden, geschlossenen Stellung in eine obere, die Rückwand zum Be- und/oder Entladen freigebende, geöffnete Stellung verstellt werden kann. Dazu erstreckt sich das Schienensystem sowohl abschnittsweise im Bereich des Rückwandrahmens als auch abschnittsweise im Bereich des Dachs.

In vielen Fällen handelt es sich bei den Paneelen um Profile aus Kunststoff, Stahl oder Aluminium, welche einen Hohlraum oder mehrere Hohlräume einschließen, um leicht und doch stabil ausgebildet werden zu können. Bei geschlossenem Rolltor sind die Paneele des Wandelements der Reihe nach übereinander angeordnet, wobei die Paneele sich quer zur Rückwand erstrecken und schwenkbar miteinander verbunden sind. Zur Ausbildung der Verbindung sind zumindest die mittleren Paneele mit oberen Verbindungsprofilen und unteren Verbindungsprofilen versehen, die so korrespondierend zueinander ausgebildet sind, dass sie einerseits formschlüssig miteinander verbunden und doch um eine Längsachse parallel zu den Paneelen gegeneinander geschwenkt werden können. Das obere Paneel des Wandelements kann an seinem oberen Rand ein Verbindungsprofil zur Aufnahme einer Dichtung zum Abdichten des Wandelements gegenüber einem oberen Teil des Rückwandrahmens aufweisen. Das untere Paneel kann an seinem unteren Rand ein Verbindungsprofil zur Aufnahme einer Dichtung zum Abdichten des Wandelements gegenüber dem Ladeboden oder dem unteren Teil des Rückwandrahmens aufweisen.

Rolltore machen das Aufschwenken von Flügeltüren an der Rückwand des Nutzfahrzeugaufbaus entbehrlich, was aus Platzgründen nicht immer problemlos erfolgen kann. Rolltore sind grundsätzlich aber relativ aufwendig und damit teuer.

Daher liegt der vorliegenden Erfindung die Aufgabe zugrunde, Nutzfahrzeugaufbauten und Nutzfahrzeuge der eingangsgenannten und zuvor näher erläuterten Art derart auszugestalten und weiterzubilden, dass diese einfacher und kostengünstiger gefertigt werden können.

Diese Aufgabe ist bei einem Nutzfahrzeugaufbau nach dem Oberbegriff von Anspruch 1 dadurch gelöst, dass die oberen Verbindungsprofile und die unteren Verbindungsprofile jeweils derart korrespondierend zueinander und untereinander jeweils derart gleichartig ausgebildet sind, so dass jedes untere Verbindungsprofil mit jedem oberen Verbindungsprofil formschlüssig verbindbar ist.

Die genannte Aufgabe ist ferner bei einem Nutzfahrzeug nach Anspruch 14 dadurch gelöst, dass der Nutzfahrzeugaufbau nach einem der Ansprüche 1 bis 13 ausgebildet ist.

Durch die Gleichartigkeit der Paneele betreffend die oberen und die unteren Verbindungsprofile aller Paneele, kann der Herstellungsprozess der Paneele und deren Montage vereinfacht werden. Dabei wird bewusst in Kauf genommen, dass das obere Verbindungsprofil des obersten Paneels und das untere Verbindungsprofil des untersten Paneels gar nicht mit einem Verbindungsprofil eines anderen Paneels verbunden werden sollen, sondern typischerweise zur Aufnahme einer Dichtung vorgesehen sind. Es ist tolerierbar, deshalb die Aufnahme der Dichtungen an die Ausgestaltung der Verbindungsprofile anzupassen, da dieser vermeintliche Nachteil durch die Vereinfachung der Paneelherstellung mehr als ausgeglichen wird.

In diesem Zusammenhang ist es nicht erforderlich, dass die oberen Verbindungsprofile aller Paneele des Wandelements völlig identisch ausgebildet sind.

Auch die unteren Verbindungsprofile aller Paneele des Wandelements müssen nicht völlig identisch ausgebildet sein. Geringe Abweichungen unter den oberen Verbindungsprofilen und/oder unter den unteren Verbindungsprofilen, die das Verbinden der unterschiedlichen oberen und unteren Verbindungsprofile miteinander nicht beeinträchtigen, können toleriert werden. Wenn jedes der oberen Verbindungsprofile der Paneele des Wandelements mit jedem einzelnen der unteren Verbindungsprofile aller anderen Paneele des Wandelements verbunden werden kann, ist keine bestimmte Reihenfolge beim Verbinden der Paneele einzuhalten, was die Herstellung des Wandelements vereinfachen kann. Gleichwohl kann es jedoch wünschenswert sein, wenn wenigstens ein bestimmtes Paneel an einer bestimmten Stelle im Wandelement angeordnet ist. Hierbei kommt insbesondere das untere Abschlusspaneel oder das obere Abschlusspaneel des Wandelements in Frage. Selbst wenn für ein Paneel oder für mehrere Paneele eine bestimmte Anordnung im Wandelement vorgesehen ist, könnte diese mit dem oberen Verbindungsprofil und mit dem unteren Verbindungsprofil jeweils mit einem beliebigen anderen Paneel des Wandelements formschlüssig verbunden werden.

Dabei ist es grundsätzlich bevorzugt, wenn das Rolltor an der Rückwand des Nutzfahrzeugaufbaus vorgesehen ist. Das Rolltor kann aber bedarfsweise auch an der Stirnwand oder einer Seitenwand des Nutzfahrzeugaufbaus vorgesehen sein. Dies wird aber nur in besonderen Fällen bevorzugt sein.

Bei einer ersten besonders bevorzugten Ausgestaltung des Nutzfahrzeugaufbaus sind die oberen Verbindungsprofile untereinander wenigstens im Wesentlichen identisch ausgebildet. Je geringer die Unterschiede zwischen den oberen Verbindungsprofilen sind, desto einfacher ist grundsätzlich der Herstellungsprozess der Paneele insgesamt, was die Fertigung des Rolltors vereinfachen kann, womit diese kostengünstiger werden können. Gleiches gilt alternativ oder zusätzlich, wenn die unteren Verbindungsprofile untereinander wenigstens im Wesentlichen identisch ausgebildet werden.

Eine Vereinfachung und Kostensenkung kann auch erreicht werden, wenn das Wandelement durch Paneele mit höchstens drei, insbesondere höchstens zwei unterschiedlichen Breiten zusammengesetzt ist. Dabei meint "unterschiedliche Breiten", dass sich die Breiten deutlich und nicht lediglich unwesentlich voneinander unterscheiden. Es kann also unterschiedliche Breitenklassen geben, wobei sich die Paneele in einer Breitenklasse hinsichtlich ihrer Breite unwesentlich unterscheiden können. Die Breitenklassen unterscheiden sich dann jedoch vorzugsweise um wenigstens einen, insbesondere um mehrere, Zentimeter voneinander. Aus den vorgenannten Gründen wird es aber auch in diesem Zusammenhang besonders bevorzugt sein, wenn die Paneele einer Breitenklasse wenigstens im Wesentlichen dieselbe Breite aufweisen. Dann können mehr Gleichteile verwendet werden, was das Wandelement einfacher und kostengünstiger werden lässt. Dabei wird als die Breite der Paneele insbesondere die Höhe der Paneele bei geschlossenem Wandelement angesehen. Die Breite ist also bedarfsweise durch eine Projektion des Paneels in einer Richtung senkrecht zum Paneel in eine Ebene parallel zum Paneel gegeben. Umso gleichartiger die Paneele hinsichtlich ihrer Breite sind, umso einfacher lassen sich diese herstellen und umso einfacher ist deren Bevorratung.

Kostengünstiger als die Verwendung von unterschiedlich breiten Paneelen wäre es grundsätzlich, wenn alle Paneele die gleiche Breite aufweisen würden. Dann könnte das Wandelement aus identischen oder wenigstens gleichen Paneelen zusammengesetzt sein. Durch die Verwendung von unterschiedlich breiten Paneelen kann aber die Höhe des Wandelements einfach an unterschiedliche Anforderungen angepasst werden, in dem nur ein oder wenigstens einzelne Paneele durch ein oder mehrere Paneele einer anderen Breite ausgetauscht werden. Dieses Prinzip ist besonders einfach zu realisieren, wenn alle Paneele bis auf ein Paneel des Wandelements die gleiche Breite aufweisen. Das andere Paneele mit einer anderen Breite kann dann jeweils so ausgewählt werden, dass die gewünschte Höhe des Wandelements erzielt wird. Es müssen dann nur sehr wenige unterschiedliche Paneele zum Bilden unterschiedlicher Wandelemente bevorratet werden. Wenn sehr viele unterschiedlich hohe Wandelemente gebildet werden müssen, um vielfachen Anforderungen gerecht zu werden, müssen bei diesem Vorgehen doch viele unterschiedlich breite Paneele bevorratet werden. In solchen Fällen kann es sich also anbieten, wenn alle Paneele bis auf zwei oder drei Paneele die gleiche Breite aufweisen und die zwei oder drei anderen Paneele in einer Breite gewählt werden, dass das Wandelement die gewünschte Höhe aufweist. Dann müssen die zwei oder drei Paneele untereinander nicht die gleiche Breite aufweisen. Bedarfsweise können die Paneele unterschiedliche Breiten aufweisen. Die Paneele werden so zusammengestellt, dass sich insgesamt ein Wandelement mit der jeweils gewünschten Höhe ergibt.

Für eine einfache Montage der Paneele zu einem Wandelement bietet es sich an, wenn die oberen Verbindungsprofile und die unteren Verbindungsprofile jeweils korrespondierend zueinander ausgebildet sind, und zwar in solch einer Art, dass jedes untere Verbindungsprofil mit jedem oberen Verbindungsprofil durch gegenseitiges Einwinkeln verbindbar ist. Dadurch können alle Paneele unabhängig von ihrer Reihenfolge untereinander schnell ineinander eingewinkelt werden. Dies bedeutet nicht, dass ein Einstecken der Verbindungsprofile parallel oder senkrecht zur den Verbindungsprofilen ausgeschlossen sein muss. Ein Einwinkeln geht aber meist einfacher und schneller. Einwinkeln bedeutet dabei, dass die Paneele durch ein Schwenken der Paneele gegeneinander miteinander verbunden werden, wobei das Schwenken bedarfsweise mit wenigstens einer anderen Bewegung überlagert sein kann. Das Verbinden durch Einwinkeln ist dabei besonders einfach, wenn dies wenigstens im Wesentlichen um eine Längsrichtung von wenigstens einem von zwei miteinander zu verbindenden Paneelen erfolgt. Bei bevorzugten Paneelen kann das Einwinkeln im Wesentlichen durch Drehen von wenigstens einem Paneel um eine sich längs zur den beiden Verbindungsprofilen erstreckende Drehachse erfolgen.

Eine dauerhafte und einfach zu fügende Verbindung kann erhalten werden, wenn die oberen Verbindungsprofile als Nutprofile und die unteren Verbindungsprofile als Federprofile ausgebildet sind. Gleiches gilt aber auch im umgekehrten Fall, bei dem die oberen Verbindungsprofile als Federprofile und die unteren Verbindungsprofile als Nutprofile ausgebildet sind. Bei entsprechenden Verbindungsprofilen kann ein sicherer Formschluss zwischen den Paneelen erreicht werden.

Wenn die Verbindungsprofile als Nutprofile und Federprofile ausgebildet sind, bietet es sich zum einfachen Einwinkeln der Paneele ineinander an, wenn die Nutprofile einen wenigstens halbkreisförmigen Nutbereich und/oder die Federprofile einen wenigstens halbkreisförmigen Federbereich aufweisen. So können die Paneele einfach und zuverlässig ineinander gedreht oder geschwenkt werden. Die wenigstens halbkreisförmigen Nutbereiche und die wenigstens halbkreisförmigen Federbereiche sind dabei bevorzugt derart korrespondierend zueinander ausgebildet, dass jeder Federbereich eines Paneels in jedem Nutbereich eines anderen Paneels des Wandelements aufgenommen werden kann. Dann muss nicht zwingend eine bestimmte Montagereihenfolge der Paneele eingehalten werden. Besonders bevorzugt kann es zur Bildung eines Formschlusses sein, wenn die Nutzbereiche und/ oder die Federbereiche mehr als halbkreisförmig, etwa wenigstens im Wesentlichen zweidrittelkreisförmig oder wenigstens im Wesentlichen dreiviertelkreisförmig, ausgebildet sind.

Wenn die Federprofile oder Federbereiche als geschlossene Teilprofile ausgebildet sind, können diese ohne hohen Materialeinsatz stabil und so gefertigt werden, dass sich die korrespondierenden Verbindungsprofile leicht verbinden lassen. Dabei bietet es sich aus den genannten Gründen in besonderem Maße an, wenn die Federprofile oder Federbereiche als Hohlprofilabschnitte ausgebildet sind.

Gewicht kann eingespart werden, ohne Einbußen hinsichtlich der Steifigkeit hinnehmen zu müssen, indem die Paneele des Wandelements im Wesentlichen als Hohlprofile ausgebildet sind. Dies gilt insbesondere dann, wenn die Paneele mehrere Hohlprofilabschnitte aufweisen. Diese Hohlprofilabschnitte können dann in bevorzugter Weise zwischen dem oberen Verbindungsprofil und dem unteren Verbindungsprofil nacheinander vorgesehen sein. So können die Paneele besonders stabil und leicht ausgebildet werden, Dies gilt umso mehr, wenn die Hohlprofilabschnitte aneinander angrenzend vorgesehen sind.

Das obere Verbindungsprofil des obersten Paneels wird nicht zur Verbindung mit einem weiteren Paneel des Wandelements benötigt. Es kann aber zweckmäßig genutzt werden, indem das obere Verbindungsprofil insbesondere formschlüssig, über Niete und/oder über Schrauben mit einer Dichtleiste zur Abdichtung des Rolltors zu einem oberen Abschnitt eines Rückwandrahmens verbunden ist. Eine formschlüssige Verbindung kann zuverlässig, langlebig und einfach zu fügen sein. Schrauben ermöglicht bedarfsweise das problemlose Austauschen der Dichtleiste, während die Dichtleiste über Nieten schnell und zuverlässig gefügt werden kann. Das Vorstehende gilt in gleicher Weise auch für den Fall, dass das untere Verbindungsprofil des untersten Paneels formschlüssig, über Niete und/oder über Schrauben mit einer Dichtleiste zum Abdichten des Rolltors zum Ladeboden oder zu einem unteren Abschnitt des Rückwandrahmens verbunden ist.

Für das Be- und/oder Entladen des Nutzfahrzeugaufbaus ist es besonders bevorzugt, wenn das Rolltor an der Rückwand des Nutzfahrzeugaufbaus vorgesehen ist. Dabei ist das Rolltor vor Beschädigungen von außen gut geschützt, wenn das Rolltor wenigstens teilweise in einem Rückwandrahmen aufgenommen ist. Grundsätzlich wird es aber zum Zwecke der Führung des Wandelements beim Verstellen in die geöffnete Stellung bevorzugt sein, wenn ein Teil des Schienensystems außerhalb des Rückwandrahmens angeordnet ist, und zwar insbesondere im Bereich des Dachs.

Des Weiteren kann ein entsprechendes Rolltor besonders zweckmäßig in einem Nutzfahrzeugaufbau in Form eines Kofferaufbaus genutzt werden. Der Kofferaufbau umfasst dabei vorzugsweise feste Seitenwände, eine feste Stirnwand und ein festes Dach.

In vielen Fällen handelt es sich bei den Paneelen bevorzugt um Profile aus Kunststoff, Stahl oder Aluminium.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Nutzfahrzeugaufbau in einer perspektivischen Ansicht,
- Fig. 2: ein Detail des Nutzfahrzeugaufbaus aus Fig. 1 in einem oberen Bereich des Rolltors in einer perspektivischen Schnittansicht,
- Fig. 3: ein Abschnitt des Wandelements des Rolltors aus Fig. 1 in einer seitlichen Schnittansicht,
- Fig. 4A-B: eine Verbindung zweier angrenzender Paneele des Rolltors aus Fig. 1 im verbundenen Zustand und während des Verbindens,
- Fig. 5: zwei unterschiedliche Paneele des Wandelements aus Fig. 1 in einer Seitenansicht,
- Fig. 6: ein Detail des Nutzfahrzeugsaufbaus im Bereich des oberen Endes des Wandelements und
- Fig. 7: ein Detail des Nutzfahrzeugsaufbaus im Bereich des unteren Endes des Wandelements.

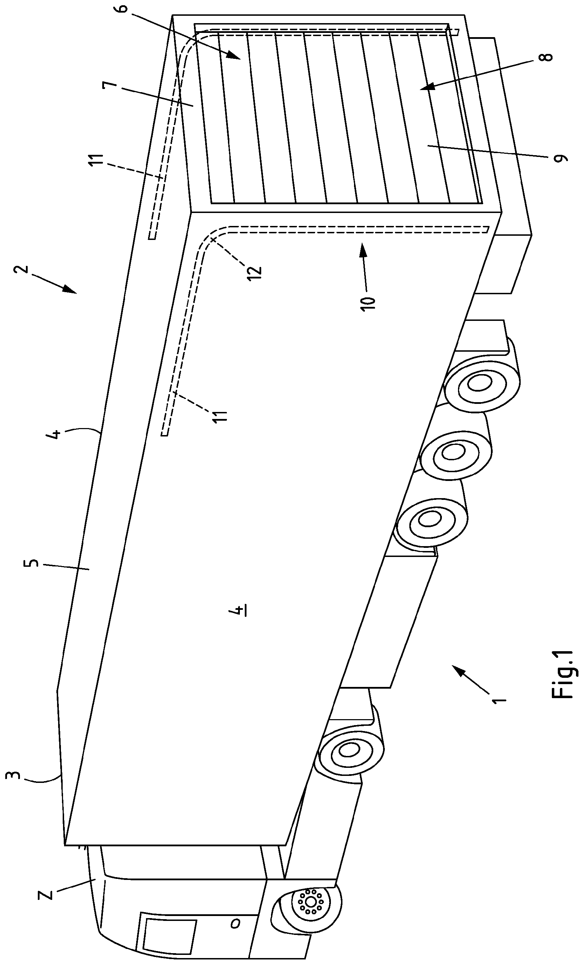

In der Fig. 1 ist ein von einer Zugmaschine Z gezogenes Nutzfahrzeug 1 mit einem Nutzfahrzeugaufbau 2 in Form eines Kofferaufbaus mit einer festen Stirnwand 3, Seitenwänden 4 und einem festen Dach 5 dargestellt. Die Rückwand 6 des Nutzfahrzeugaufbaus 2 wird durch einen Rückwandrahmen 7 und ein Rolltor 8 gebildet, das teilweise im Rückwandrahmen 7 aufgenommen ist. Das Rolltor 8 umfasst ein Wandelement 9, das sich entlang eines Schienensystems 10 an beiden Seiten des Rolltors 8 nach oben und wieder zurück nach unten verstellen lässt. In der oberen, geöffneten Stellung des Wandelements 9 gibt das Wandelement 9 den Rückwandrahmen 7 wenigstens bereichsweise zum Be- und/oder Entladen eines Laderaums des Nutzfahrzeugsaufbaus 2 frei. Das Wandelement 9 ist dann wenigstens im Wesentlichen unter dem Dach 5 angeordnet. Zu diesem Zweck umfassen die Schienenelemente 11 des Schienensystems 10 Bögen 12 im Verbindungsbereich von Dach 5 und Rückwandrahmen 7. Außerhalb dieser Bögen 12 erstrecken sich die Schienenelemente 11 des Schienensystems 10 des dargestellten und insoweit bevorzugten Nutzfahrzeugaufbaus 2 wenigstens im Wesentlichen geradlinig. In der unteren, geschlossenen Stellung des Wandelements 9 verschließt das Wandelement 9 den Rückwandrahmen 7. In dieser Stellung ist das Wandelement 9 wenigstens im Wesentlichen parallel zum Rückwandrahmen 7 ausgerichtet und lässt sich das Wandelement 9 am unteren Rand des Rückwandrahmens 7 verriegeln.

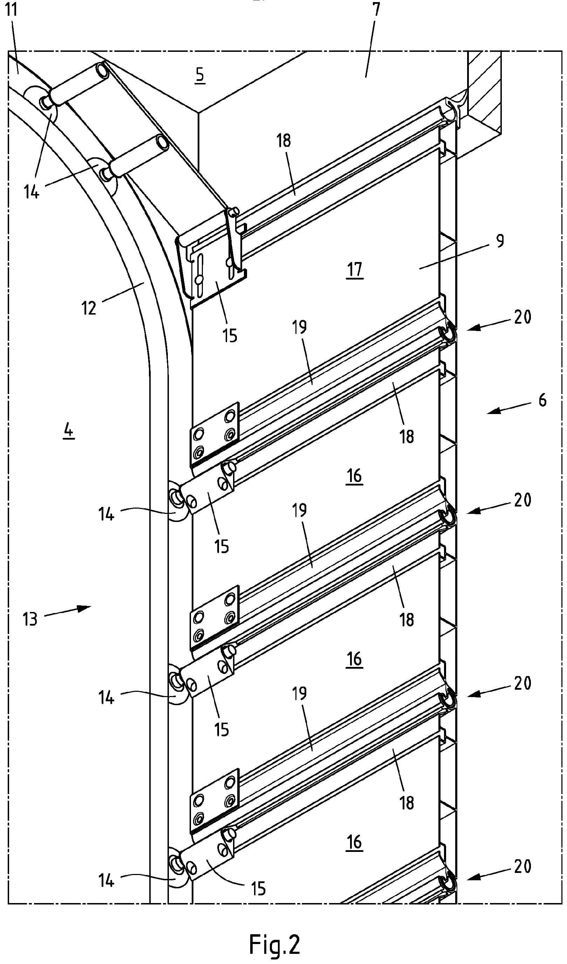

In der Fig. 2 ist ein Detail des Nutzfahrzeugs 1 im Bereich des Rückwandrahmens 7 mit dem oberen Ende des Rolltors 8 aus dem Laderaum 13 heraus gesehen dargestellt. Angrenzend an die Seitenwände 4 ist zu beiden Seiten des Wandelements 9 das separate Schienenelement 11 an beiden Seiten des Nutzfahrzeugaufbaus 2 umfassende Schienensystem 10 vorgesehen, in dem Rollen 14 geführt werden. Die Rollen 14 sind an Rollenhaltern 15 gehalten, die mit Paneelen 16,17 des Wandelements 9 verbunden sind. Beim Verstellen des Wandelements 9 zwischen der geschlossenen und der geöffneten Stellung rollen die Rollen 14 entlang des Schienensystems 10 bzw. der Schienenelemente 11 rauf und runter, wie die zugehörigen Paneele 16,17 nach oben und wieder nach unten verstellt werden. Die Paneele 16,17 sind so formschlüssig und gegeneinander schwenkbar, insbesondere um eine Längsachse drehbar, miteinander verbunden, dass die Paneele 16,17 während des Verstellens des Wandelements 9 sicher miteinander verbunden bleiben.

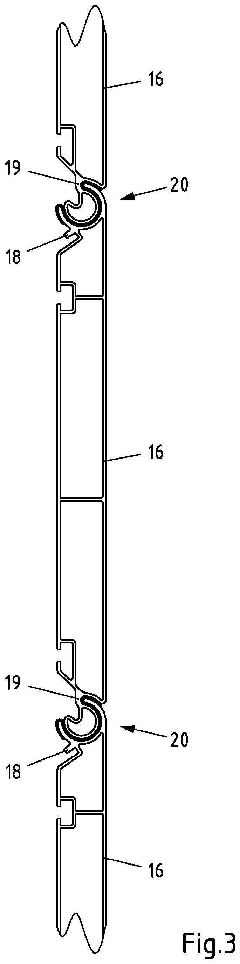

In der Fig. 3 sind drei miteinander verbundene Paneele 16,17 dargestellt. Die Verbindung wird durch obere Verbindungsprofile 18 und untere Verbindungsprofile 19 der Paneele 16,17 bereitgestellt, die formschlüssig ineinandergreifen. Dabei sind jeweils die oberen Verbindungsprofile 18 und die unteren Verbindungsprofile 19 gleichartig und derart korrespondierend zueinander ausgebildet, dass die aneinander angrenzenden Verbindungsprofile 18,19 der aneinander angrenzenden Paneele 16,17 verbunden werden können. Die Verbindbarkeit der Paneele 16,17 untereinander ist aber nicht darauf beschränkt. Vielmehr kann jedes der oberen Verbindungsprofile 18,19 eines beliebigen Paneels 16,17 des Wandelements 9 mit einem unteren Verbindungsprofil 19 eines beliebigen anderen Paneels 16,17 des Wandelements 9 formschlüssig verbunden werden. Bei dem dargestellten und insoweit bevorzugten Wandelement 9 sind die oberen Verbindungsprofile 18 der Paneele 16,17 und ebenso die unteren Verbindungsprofile 19 der Paneele 16,17 identisch zueinander ausgebildet.

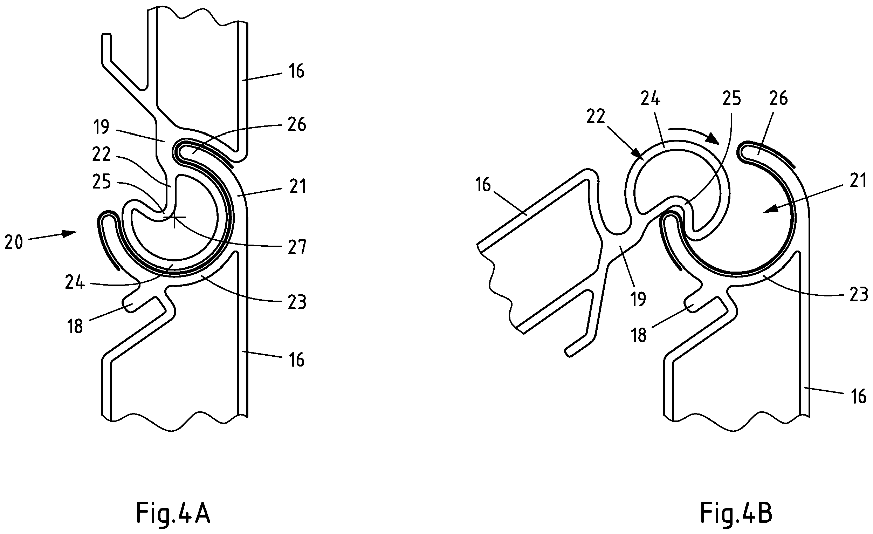

Die Verbindung 20 zweier Paneele 16,17 miteinander ist in den Fig. 4A-B im Detail dargestellt, wobei die Verbindung 20 in der Fig. 4A bereits gefügt und in der Fig. 4B während des Fügens dargestellt ist. Das jeweils obere Verbindungsprofil 18 der Paneele 16,17 ist in Form eines Nutprofils 21 ausgebildet, während jeweils das untere Verbindungsprofil 19 der Paneele 16,17 in Form eines Federprofils 22 ausgebildet ist. Das obere Verbindungsprofil 18 weist einen etwa dreiviertelkreisförmigen Nutbereich 23 auf, während das untere Verbindungsprofil 19 einen etwa dreiviertelkreisförmigen Federbereich 24 aufweist. Der Nutbereich 23 und der Federbereich 24 sind dabei so korrespondierend zueinander ausgebildet, dass der Federbereich 24 in dem Nutbereich 23 aufgenommen werden kann, und zwar bei dem dargestellten und insoweit bevorzugten Wandelement 9 formschlüssig.

Das untere Verbindungsprofil 19 ist im Wesentlichen als geschlossenes Teilprofile im Sinne eines Hohlprofilabschnitts ausgebildet. Dabei ist die Kontur des unteren Verbindungsprofils 19 so ausgebildet, dass der Federbereich 24 abschnittsweise wenigstens im Wesentlichen in Form einer Dreiviertelkreisfläche ausgebildet ist. Der Rücksprung 25 nach innen im Hohlprofilabschnitt erlaubt dabei das teilweise Einsetzen des Federbereichs 24 des unteren Verbindungsprofils 19 in den angrenzende Nutbereich 23 des entsprechenden oberen Verbindungsprofils 18. Dabei nimmt der Bereich des Rücksprungs 25 einen endseitigen Abschnitt 26 des Nutbereichs 24 auf. Aus dieser relativen Position der beiden Verbindungsprofile 18,19 kann nun das untere Verbindungsprofil 19 in das korrespondierende obere Verbindungsprofil 18 eingeschwenkt werden, wobei der Federbereich 24 in den Nutbereich 23 hineinrutscht. Man spricht hierbei auch von einem Einwinkeln, da die Paneele 16,17 zunächst ein einem Winkel zueinander angenähert und anschließend gegeneinander geschwenkt werden, wobei sich der Federbereich 24 in die gewünschte Stellung in den Nutbereich 23 verschiebt. Dabei wird ein Formschluss geschaffen, der auch dann aufrechterhalten wird, wenn die Paneele 16,17 beim Verstellen nach oben im Bereich der Bögen 12 des Schienensystems 10 im Eckbereich zwischen Rückwandrahmen 7 und Dach 5 prinzipiell in die Gegenrichtung gegeneinander geschwenkt werden. Dabei bleibt der Federbereich 24 nämlich im Nutbereich 23 gehalten und dreht sich der Federbereich 24 lediglich um eine Längsachse 27 in dem Nutbereich 23.

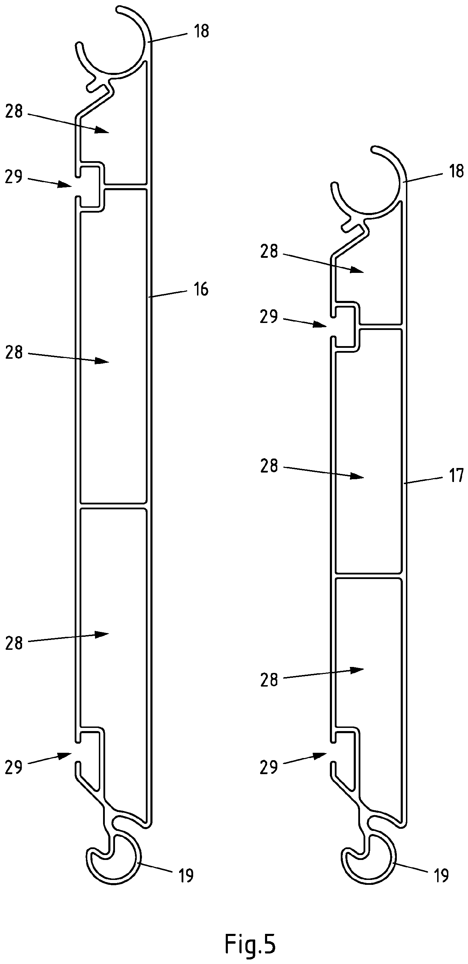

In der Fig. 5 sind zwei unterschiedliche Paneele 16,17 des Wandelements 9 dargestellt. Das dargestellte und insoweit bevorzugte Wandelemente 9 weist dabei das rechts dargestellte, etwas schmalere Paneel 17 nur ein einziges Mal auf. Die anderen Paneele 16 des Wandelements 9 entsprechen alle identisch dem links dargestellten breiteren Paneel 16. Dabei bemisst sich die Breite der dargestellten und insoweit bevorzugten Paneele 16,17 vom oberen Rand des oberen Verbindungsprofils 18 bis zum unteren Rand des unteren Verbindungsprofils 19. In dieser Längserstreckung der Paneele 16,17 weisen diese zwischen den Verbindungsprofilen 18,19 drei Hohlprofilabschnitte 28 auf, die nacheinander folgend und aneinander angrenzend vorgesehen sind. Des Weiteren sind dem oberen Rand und dem unteren Rand der Paneele 16,17 zugeordnet jeweils eine T-Nut 29 vorgesehen. In diesen T-Nuten 29 können Nutensteine eingeführt werden, an denen beispielsweise Rollenhalter 15 zum Halten der in dem Schienensystem 10 geführten Rollen 14 montiert, insbesondere verschraubt, werden können.

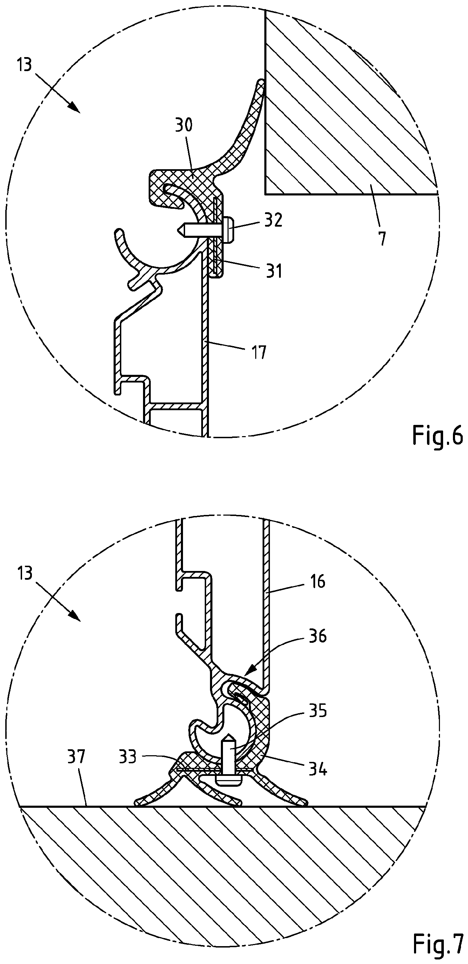

In der Fig. 6 ist der obere Abschnitt des Wandelements 9 dargestellt, wobei das obere Verbindungsprofil 18 des obersten Paneels 17 mit einer Dichtleiste 30 verbunden ist, die sich an einem oberen Rand des Rückwandrahmens 7 von innen abstützt, wenn sich das Wandelement 9 in der unteren, geschlossenen Stellung befindet. In der Dichtleiste 30 ist ein sich in Längsrichtung des Paneels 17 erstreckender Metallstreifen 31 vorgesehen, durch den hindurch die Dichtleiste 30 mit dem Nutbereich 23 des oberen Verbindungsprofils 18 über Schrauben 32 verschraubt ist. Zudem umgreift die Dichtleiste 30 den oberen Rand des Nutbereichs 23 formschlüssig.

In der Fig. 7 ist der untere Abschnitt des Wandelements 9 mit dem unteren Verbindungsprofil 19 des untersten Paneels 16 des Wandelements 9 dargestellt. Am Federbereich 24 des unteren Verbindungsprofils ist eine ein sich in Längsrichtung erstreckenden Metallstreifen 33 aufweisende Dichtleiste 34 vorgesehen. Die Dichtleiste 34 ist über den Metallstreifen 33 am unteren Ende des Federbereichs 24 über Schrauben 35 verschraubt. Die Dichtleiste 34 greift dabei formschlüssig um den Federbereich 24 des unteren Verbindungsprofils 19 herum. Dabei ist ein freies Ende der Dichtleiste 34 in Bezug auf das freie Ende nach hinten umgelegt und so an dem Verbindungsprofils 19 anliegend in eine Aufnahme 36 für ein Endbereich des Nutbereichs 23 aufgenommen. Diese Aufnahme 36 erfüllt bei unterschiedlichen Paneelen 16,17 unterschiedliche Funktionen. Die Dichtleiste 34 verkeilt sich daher, wenn Auszugskräfte auf die Dichtleiste 34 wirken. Die Dichtleiste 34 bleibt daher zuverlässig am unteren Verbindungsprofil 19 gehalten. Die Dichtleiste 34 stützt sich ferner mit gegenüberliegenden Enden an einem unteren Rand des Rückwandrahmens 7 bzw. des Ladebodens 37 des Nutzfahrzeugsaufbaus 2 ab.

### Bezugszeichenliste

- 1: Nutzfahrzeug
- 2: Nutzfahrzeugaufbau
- 3: Stirnwand
- 4: Seitenwände
- 5: Dach
- 6: Rückwand
- 7: Rückwandrahmen
- 8: Rolltor
- 9: Wandelement
- 10: Schienensystem
- 11: Schienenelement
- 12: Bogen
- 13: Laderaum
- 14: Rolle
- 15: Rollenhalter
- 16: Paneel
- 17: Paneel
- 18: oberes Verbindungsprofil
- 19: unteres Verbindungsprofil
- 20: Verbindung
- 21: Nutprofil
- 22: Federprofil
- 23: Nutbereich
- 24: Federbereich
- 25: Rücksprung
- 26: endseitiger Abschnitt
- 27: Längsachse
- 28: Hohlprofilabschnitt
- 29: T-Nut
- 30: Dichtleiste
- 31: Metallstreifen
- 32: Schrauben
- 33: Metallstreifen
- 34: Dichtleiste
- 35: Schrauben
- 36: Aufnahme
- 37: Ladeboden
- Z: Zugmaschine

## Patentansprüche

1. Nutzfahrzeugaufbau (2) für ein Nutzfahrzeug, insbesondere Lastkraftwagen, Anhänger oder Sattelauflieger, mit einem Rolltor (8), umfassend ein von einer den Nutzfahrzeugaufbau (2) verschließenden geschlossenen Stellung in eine den Nutzfahrzeugaufbau (2) zum Be- und/oder Entladen freigebende geöffnete Stellung und zurück verstellbaren Wandelement (9) und ein Schienensystem (10) zum Führen des Wandelements (9) während des Verstellens des Wandelements (9) von der geschlossenen Stellung in die geöffnete Stellung und zurück, wobei das Wandelement (9) eine Reihe von Paneelen (16,17) aufweist, wobei jedes Paneel (16,17) am oberen Rand ein oberes Verbindungsprofil (18) aufweist und am gegenüberliegenden unteren Rand ein unteres Verbindungsprofil (19) aufweist und wobei jeweils zwei aneinander angrenzende Paneele (16,17) über ein unteres Verbindungsprofil (19) und ein oberes Verbindungsprofil (18) formschlüssig miteinander verbunden sind,
**dadurch gekennzeichnet, dass**
die oberen Verbindungsprofile (18) und die unteren Verbindungsprofile (19) jeweils derart korrespondierend zueinander und untereinander jeweils derart gleichartig ausgebildet sind, so dass jedes untere Verbindungsprofil (19) mit jedem oberen Verbindungsprofil (18) formschlüssig verbindbar ist.

2. Nutzfahrzeugaufbau nach Anspruch 1,
**dadurch gekennzeichnet, dass**
die oberen Verbindungsprofile (18) untereinander wenigstens im Wesentlichen identisch ausgebildet sind und/oder dass die unteren Verbindungsprofile (19) untereinander wenigstens im Wesentlichen identisch ausgebildet sind.

3. Nutzfahrzeugaufbau nach Anspruch 1 oder 2,
**dadurch gekennzeichnet, dass**
Paneele (16,17) des Wandelements 9 wenigstens im Wesentlichen maximal drei, vorzugsweise wenigstens im Wesentlichen maximal zwei, unterschiedliche Breiten jeweils umfassend das obere Verbindungsprofil (18) und das untere Verbindungsprofil (19), insbesondere in einer Projektion des Paneels (16,17) in einer Richtung senkrecht zum Paneel (16,17) in eine Ebene parallel zum Paneel (16,17), aufweisen.

4. Nutzfahrzeugaufbau nach einem der Ansprüche 1 bis 3,
**dadurch gekennzeichnet, dass**
die oberen Verbindungsprofile (18) und die unteren Verbindungsprofile (19) jeweils derart korrespondierend zueinander ausgebildet sind, so dass jedes untere Verbindungsprofil (19) mit jedem oberen Verbindungsprofil (18) durch gegenseitiges Einwinkeln, insbesondere durch Einwinkeln wenigstens im Wesentlichen um eine Längsrichtung von wenigstens einem von zwei miteinander zu verbindenden Paneelen (16,17), verbindbar ist.

5. Nutzfahrzeugaufbau nach einem der Ansprüche 1 bis 4,
**dadurch gekennzeichnet, dass**
die oberen Verbindungsprofile (18) als Nutprofile (21) und die unteren Verbindungsprofile (19) als Federprofile (22) ausgebildet sind oder dass die oberen Verbindungsprofile (18) als Federprofile (22) und die unteren Verbindungsprofile (19) als Nutprofile (21) ausbildet sind.

6. Nutzfahrzeugaufbau nach Anspruch 5,
**dadurch gekennzeichnet, dass**
die Nutprofile (21) einen wenigstens halbkreisförmigen Nutbereich (23) und/oder die Federprofile (22) einen wenigstens halbkreisförmigen Federbereich (24) aufweisen und dass, vorzugsweise, die wenigstens halbkreisförmigen Nutbereiche (23) und die wenigstens halbkreisförmigen Federbereiche (24) derart korrespondierend zueinander ausgebildet sind, so dass jeder Federbereich (24) in jedem Nutbereich (23) aufgenommen werden kann.

7. Nutzfahrzeugaufbau nach Anspruch 6,
**dadurch gekennzeichnet, dass**
die wenigstens halbkreisförmigen Nutbereiche (23) und/oder die wenigstens halbkreisförmigen Federbereiche (24) wenigstens im Wesentlichen dreiviertelkreisförmig ausgebildet sind.

8. Nutzfahrzeugaufbau nach einem der Ansprüche 5 bis 7,
**dadurch gekennzeichnet, dass**
die Federprofile (22) oder Federbereiche (24) als geschlossene Teilprofile, insbesondere als Hohlprofilabschnitte, ausgebildet sind.

9. Nutzfahrzeugaufbau nach einem der Ansprüche 1 bis 8,
**dadurch gekennzeichnet, dass**
die Paneele (16,17) des Wandelements (9) als Hohlprofile ausgebildet sind und dass, vorzugsweise, die Paneele mehrere Hohlprofilabschnitte (28) aufweisen.

10. Nutzfahrzeugaufbau nach Anspruch 9,
**dadurch gekennzeichnet, dass**
die Hohlprofilabschnitte (28) zwischen dem oberen Verbindungsprofil (18) und dem unteren Verbindungsprofil (19) nacheinander, insbesondere aneinander angrenzend, vorgesehen sind.

11. Nutzfahrzeugaufbau nach einem der Ansprüche 1 bis 10,
**dadurch gekennzeichnet, dass**
das obere Verbindungsprofil (18) des obersten Paneels (17) formschlüssig, über Niete und/oder über Schrauben (32), mit einer Dichtleiste (30) zur Abdichtung des Rolltors (8) zu einem oberen Abschnitt eines Rückwandrahmens (7) verbunden ist und/oder dass das untere Verbindungsprofil (19) des untersten Paneels (16) formschlüssig, über Niete und/oder über Schrauben (35), mit einer Dichtleiste (34) zum Abdichten des Rolltors (8) zum Ladeboden (37) oder zu einem unteren Abschnitt des Rückwandrahmens (7) verbunden ist.

12. Nutzfahrzeugaufbau nach einem der Ansprüche 1 bis 11,
**dadurch gekennzeichnet, dass**
das Rolltor (8) an der Rückwand (6) des Nutzfahrzeugaufbaus (2) vorgesehen, insbesondere wenigstens teilweise in einem Rückwandrahmen (7) aufgenommen, ist.

13. Nutzfahrzeugaufbau nach einem der Ansprüche 1 bis 12,
**dadurch gekennzeichnet, dass**
der Nutzfahrzeugaufbau (2) als Kofferaufbau mit festen Seitenwänden (4), einer festen Stirnwand (3) und einem festen Dach (5) ausgebildet ist.

14. Nutzfahrzeug (1) in Form eines Lastkraftwagens, Anhängers oder Sattelaufliegers mit einem Nutzfahrzeugaufbau (2) nach einem der Ansprüche 1 bis 13.
